# EUROPEAN PATENT APPLICATION

(11) **EP 1 577 366 A2**
(43) Date of publication of application: **21.09.2005**
(21) Application number: 04006260.6
(22) Date of filing: 16.03.2004
(51) Int. Cl.: C10G 1/00

(54) **Process for conversion of waste material to liquid fuel**

(30) Priority: 14.03.2004 AU 2004901235
(71) Applicant: Ozmotech Pty. Ltd., Notting Hill, Victoria, 3168 (AU)
(72) Inventor: Baker, Gary, Patterson Lakes, Victoria 3197 (AU)
(74) Representative: Strehl Schübel-Hopf & Partner

(57) **Abstract**

A process for the thermocatalytic conversion of waste materials into reusable fuels, involving the steps of delivering melted waste material to one or more pyrolysis chambers via heated and valved manifolds and effecting gasification of the waste material in an oxygen purged and pressure controlled environment. Pyrolytic gases are then transferred to a catalytic converter where the molecular structure of the gaseous material is altered in structure and form, with gases then transferred to one or more condensers to distil and cool gases in to their respective fractions. After post pyrolysis treatment, fuel fractions then form a useable fuel. The present invention discloses the melting of waste (plastic) material before delivery into any the combustion chambers, making the movement of material into the catalytic tower a semi-continuous operation, directing melted waste material into two or more, but preferably four, pyrolysis chambers, making each chamber capable of independent operation, mechanically removing waste char from one or more pyrolysis chambers by use of one or more internal augers or suitable means, various performance improvements to the conversion process and a fuel produced by the process.

## Description

### FIELD OF INVENTION

The present invention relates to the field of processing waste material into new products, which have valuable and useful properties. In one aspect, the present invention relates to a process for converting plastics to liquid hydrocarbons, particularly diesel fuel. It will be convenient to hereinafter describe the invention in relation to the conversion of plastics to diesel fuel, however it should be appreciated that the present invention is not limited to that use only.

### BACKGROUND ART

Numerous unsuccessful attempts have been made in the past to efficiently re-process a feedstock of waste plastics back into a liquid hydrocarbon product that has valuable and useful properties. A considerable tonnage of waste commodity plastics, or polymers, are improperly disposed of each year. In previous years, there has been considerable improvement in the collection and recycling of common waste polymers. However, the recycling and reuse of waste polymers, as now practiced without subsidies have proven to be uneconomic, forcing the abandonment of many recycling efforts. The recycling of waste polymers as fuel has also not proven practical because of the inability to collect sufficient quantities to sustain operation of the recycling machinery.

Thermolysis is a known basic process whereby plastic waste material is converted to liquid fuel by thermal deg radation (cracking) in the absence of oxygen. Plastic waste is typically first made molten within a stainless steel chamber under an inert purging gas, such as nitrogen. This chamber then heats the molten material to a gaseous state that is drawn into a catalytic converter and cracked to form carbon chain lengths of a certain desirable range.

Hot pyrolytic gases of the desired carbon length range are then condensed in one or more condensers to yield a hydrocarbon distillate comprising straight and branched chain aliphatics, cyclic aliphatics and aromatic hydrocarbons. The resulting mixture is roughly equivalent to regular diesel fuel after the placement of additives and the implementation of other minor downstream processing actions.

Diesel fuel is a blend of hydrocarbon compounds known as distillates that are heavier than gasoline but lighter than lubricating oil. Diesel is a mixture of straight-chain and branched alkanes, cyclic saturated hydrocarbons and aromatics. Diesel fuel is designed to operate in a diesel engine only, where it is injected into the diesel engine combustion chamber with compressed, high-temperature air and ignites spontaneously. Conversely, gasoline in a petrol engine is ignited by spark plugs. Diesel fuel produced by pyrolysis and other methods must meet a range of composition requirements before being certified for sale in a number of countries.

Existing thermolysis system based plants are in operation but display a series of significant shortfalls and disadvantages, which ultimately result in inefficient production and throughput of liquid hydrocarbons from waste plastic materials. A primary disadvantage is the process of loading plastic waste manually, and also the system being unable to receive variable sizes of plastic waste feedstocks. Existing systems that receive manually loaded blocks or rolls of plastics leave a great deal of excess air space in the pyrolysis chamber, which must be sealed to allow purging of atmospheric gas and melting of the material. Once sealed, no further waste can be added to the chamber which otherwise has space for more material once it is melted. The inability t o fill the pyrolysis chamber to its maximum reduces the speed of the entire process and ultimately the throughput of these known thermolysis systems.

Typically, the known thermolysis plants have two pyrolysis chambers, known as twin-chamber systems, which work together at an approximately equal rate. Of particular issue with the set up of existing pyrolysis chambers is that fuel may only be produced in a batch type basis. Once both chambers complete the pyrolysis of waste material in unison, it is necessary to wait for each to cool before unwanted carbonaceous char can be removed from the internal base of each chamber. It is therefore presently necessary to wait for each chamber to cool and be hand cleaned of char before the chambers can be used again for second and subsequent batches. In addition to this set-up limitation, the physical size of the existing chambers greatly limits the batched throughput capacity of waste materials.

Of further issue with existing thermolysis systems are: higher frequency clean out times of chambers; poor heat transfer within the waste feedstock itself; increased process time per chamber load and also; the expense and fouling of consumable catalysts. The final issue is a measure of diesel fuel's ability to reduce wear on contacting solid surfaces found in some fuel pumps and injectors.

Of further issue with existing thermolysis systems is that fuel produced is often of a variable standard and cannot be used in engines and other machinery that lacks a tolerance to such fuel inconsistency. Of particular concern is the property of the fuels produced by these existing processes, which have a flash point generally varying between 25°Cand 45°C, which are too low due to the high presence of light fuel fractions. Such fuels are therefore unsuitable for the expected use in all regions of the world, and applications other than stationary engines.

The above discussion and any other discussion of documents, devices, acts or knowledge in this specification is included to explain the context of the invention. It should not be taken as an admission that any of the material forms a part of the prior art base or the common general knowledge in the relevant art in Australia or elsewhere on or before the priority date of the disclosure and claims herein.

In light of the foregoing discussion, an object of the present invention is to provide for a thermolysis process that has an increased throughput of liquid hydrocarbons that are of consistent quality, using waste plastic stockfeed.

A further object of the present invention is to at least alleviate or overcome at least one disadvantage associated with the prior art.

### SUMMARY OF INVENTION

The present invention provides a process for the thermocatalytic conversion of waste materials into reusable fuels, comprising the steps of: delivering waste material to a melting means; directing melted waste material from one or more manifolds into one or more pyrolysis chambers; heating waste material to effect gasification of material in a substantially oxygen purged and pressure controlled environment; transferring resulting gases to a catalytic converter means wherein the molecular structure of the gaseous material is altered in structure and form; transferring gases to one or more condenser means to distil and cool gases in to their respective fractions; and wherein fractions form a useable fuel.

In a preferred aspect, the invention provides for a process for the thermocatalytic conversion of waste materials into reusable fuels, wherein the process is at least semi-continuous in operation.

In a further preferred aspect, the invention provides for a process for the thermocatalytic conversion of waste materials into reusable fuels, wherein melted waste material is directed into two or more pyrolysis chambers that are capable of independent operation.

In a further preferred aspect, the invention provides for a process for the thermocatalytic conversion of waste materials into reusable fuels, wherein a plurality of pyrolysis chambers operate independently to allow cyclic transferral of gaseous material from one or more pyrolysis chambers to a catalytic converter means.

In a further preferred aspect, the invention provides for a process for the thermocatalytic conversion of waste materials into reusable fuels, wherein a plurality of pyrolysis chambers are used alternately at least one at a time so that one pyrolysis chamber is able to cool while another pyrolysis chamber is able to transfer gaseous material to a catalytic converter means.

In a further preferred aspect, the invention provides for a process for the thermocatalytic conversion of waste materials into reusable fuels, wherein one or more pyrolysis chambers are actively cooled after completing transferral of gaseous waste material to a catalytic converter means.

In a further preferred aspect, the invention provides for a process for the thermocatalytic conversion of waste materials into reusable fuels, wherein char is mechanically removed from one or more pyrolysis chambers by use of one or more augers.

In a further preferred aspect, the invention provides for a process for the thermocatalytic conversion of waste materials into reusable fuels, wherein the process uses at least four pyrolysis chambers which receive melted waste material by selective operation of a manifold system having a corresponding number of inlet pathways.

In a further preferred aspect, the invention provides for a process wherein the manifold system is pre-heated.

In a further preferred aspect, the invention provides for a process wherein the waste material are polyolefins.

In a further preferred aspect, the invention provides for a process wherein the waste material is are polyolefins and other material considered waste to the process of the invention.

In a further preferred aspect, the invention provides for a process wherein the melting means is a hot-melt in-feed system.

In a further preferred aspect, the invention provides for a process wherein the melting means is located prior to the pyrolysis chamber.

In a further preferred aspect, the invention provides for a process wherein the catalytic converter consists of a series of high-surface area, internal metal plates that are the catalyst.

In a further preferred aspect, the invention provides for a process wherein the plate catalyst is selected from the group including ceramics, zeolites, the silicates of iron Fe3+, cobalt Co2+, nickel Ni2+, manganese Mn\2+, chromium Cr3+, copper Cu2+ and/or their mixtures or the catalyst MCM-41.

In a further preferred aspect, the invention provides for a substantially carbon based fuel product produced by the process of the invention, the fuel including carbon chains in the range of length C6 to C25.

In a further preferred aspect, the invention provides for a substantially carbon based fuel product produced by the process of the invention, the fuel including carbon chains in a range peaking at length C16.

In a further preferred aspect, the invention provides for a substantially carbon based fuel product produced by the process of any one of the preceding claims that is substantially equivalent to the diesel fuel standard in Australia, specified as AS 3570-1998.

In a further preferred aspect, the invention provides for a process wherein reusable hydrocarbons are liquid hydrocarbons.

In a further preferred aspect, the invention provides for a process wherein a storage vessel is a storage hopper.

In a further preferred aspect, the invention provides for a process wherein drawing off is by a screw drive system.

In a further preferred aspect, the invention provides for a process wherein a pipe means is a heated lag pipe.

In a further preferred aspect, the invention provides for a process wherein a manifold is a heated 4-way manifold.

In a further preferred aspect, the invention provides for a process wherein the manifold directs melted waste to one of four pyrolysis chambers.

In a further preferred aspect, the invention provides for a process wherein chamber oxygen is purged by the introduction of a gas.

In a further preferred aspect, the invention provides for a process wherein the purge gas is selected from the group consisting of nitrogen, helium, hydrogen, methane, natural gas, and combinations thereof.

In a further preferred aspect, the invention provides for a process wherein the pyrolysis chamber heating range is 390 C - 410 C.

In a further preferred aspect, the invention provides for a process wherein the chamber heating range is 350 C - 425 C.

In a further preferred aspect, the invention provides for a process wherein the pyrolysis chambers are pressurised to a pressure of 1.08 bar.

In a further preferred aspect, the invention provides for a process wherein a converter uses no consumable catalyst.

In a further preferred aspect, the invention provides for a process wherein a gaseous material is vapourised to form hydrocarbon molecules.

In a further preferred aspect, the invention provides for a process wherein excess non-condensable gases are transferred through a caustic wash to remove acids, then to an off-gas chamber where destroyed.

In a further preferred aspect, the invention provides for a process wherein a catalytic converter is heated by exhaust gases from the furnace of one or more of the pyrolytic chambers.

In a further preferred aspect, the invention provides for a process wherein a catalytic converter modifies carbon chains longer than C25 and reforms carbon chains shorter than C6.

In a further preferred aspect, the invention provides for a process wherein the metal catalyst 'cracks' parafinic chains longer than C25.

In a further preferred aspect, the invention provides for a process wherein a catalyst ensures that the final fuel has a carbon chain distribution in the range C8-C25 and peaking at C16 (cetane).

In a further preferred aspect, the invention provides for a process wherein the condensing temperature is not consistent across all elements of the condensing system.

In a further preferred aspect, the invention provides for a process wherein a lower condensing coil is run at a lower temperature than the upper condensing coil.

In a further preferred aspect, the invention provides for a process wherein the separation of the light fraction is during the thermolysis process.

In a further preferred aspect, the invention provides for a process wherein a four-way manifold automatically feeds each of four pyrolysis chambers in turn.

In a further preferred aspect, the invention provides for a process wherein the waste materials are selected from the group consisting of addition polymers, condensation polymers, and combinations thereof.

In a further preferred aspect, the invention provides for a process wherein the waste organic materials are selected from the group consisting of used rubber, waste plastic, used oils and lubricants, and combinations thereof.

In a further preferred aspect, the invention provides for a process wherein the waste organic materials are selected from the group consisting of aliphatic species, aromatic species, species containing both aliphatic and aromatic substituents, and combinations thereof.

Other aspects and preferred aspects are disclosed in the specification and / or defined in the appended claims, forming a part of the description of the invention.

In essence, the inventor has identified a new process that has the capacity to greatly increase the throughput of waste plastic stockfeed to produce liquid hydrocarbon fuel that is of a consistent quality. This throughput is primarily achieved by the method by which waste stockfeed is prepared and delivered into a pyrolysis chamber system. Advances made by the invention process include melting waste (plastic) material before delivery into any of the main combustion chambers by use of a hot-melt in-feed system to affect a greater fill and therefore the efficiency of each pyrolysis chamber. Further advances are made by making the movement of material into the catalytic tower a semi-continuous operation. This semi-continuous operation is in part achieved by:
- Directing melted waste material into two or more, but preferably four pyrolysis chambers, making each chamber capable of independent operation.
- The use of a pre-heated four-way manifold system having a corresponding number of inlet pathways that may be adjusted to direct melted waste material into one or more of the pyrolysis chambers.
- Cooling one pyrolysis chamber while another pyrolysis chamber is able to transfer gaseous material to a catalytic converter means.
- Mechanically removing waste char from one or more pyrolysis chambers by use of one or more internal augers or other suitable means.

Further aspects of invention relate to various performance improvements to the overall process as disclosed herein.

The present invention has been found to result in a number of advantages such as: elimination of manual handling of the plastic feedstock; shortening the time taken to get the prime pyrolysis chamber to full operating temperature; achieving 100% molten plastic feedstock capacity prior to prime chamber operation commencement - this maximises the volume of material in each chamber before treatment commences; improved uniformity of temperature, improved reduction and removal of charring; improved heat transfer to materials; improved pyrolysis; a reduction in system cleaning and; improved fuel consistency.

The above advantages result in the expansion of the throughput and production capacity of the prior art systems, to the production of 9,500 litres per day from 10 tonnes of waste plastics. Active cooling increases each chamber 26 cycle time per day from one current cycle per day to 5 cycles per 48 hour period, increasing the capacity of the system to process up to 13.5 tonnes per 24 hour period, yielding 12,575 litres per 24 hour period.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Further disclosure, objects, advantages and aspects of the present application may be better understood by those skilled in the relevant art by reference to the following drawings of preferred embodiments which are given by way of illustration only, and thus are not limitative of the present invention, and in which:
FIG 1 illustrates a diagrammatic overview of a thermolysis system with major features according to a preferred embodiment of the present invention,
FIG 2 illustrates a plan view of a plant layout of a thermolysis system according to a preferred embodiment of the present invention,
FIG 3 illustrates an elevation or side view of the plant layout shown in FIG 2,
FIG 4 illustrates a gas chromatography chromatogram chart indicating the relative proportion of carbon chain lengths within normal diesel fuel. The Y axis of this chart indicates the quantity, and
FIG 5 illustrates a gas chromatography chromatogram chart indicating the relative proportion of carbon chain lengths within diesel fuel produced by the thermolysis system of a preferred embodiment of the present invention. The Y axis of this chart indicates the quantity.

### DETAILED DESCRIPTION

Unless defined otherwise in this specification, all technical terms are used herein according to their conventional definitions as they are commonly used and understood by those of ordinary skill in the art.

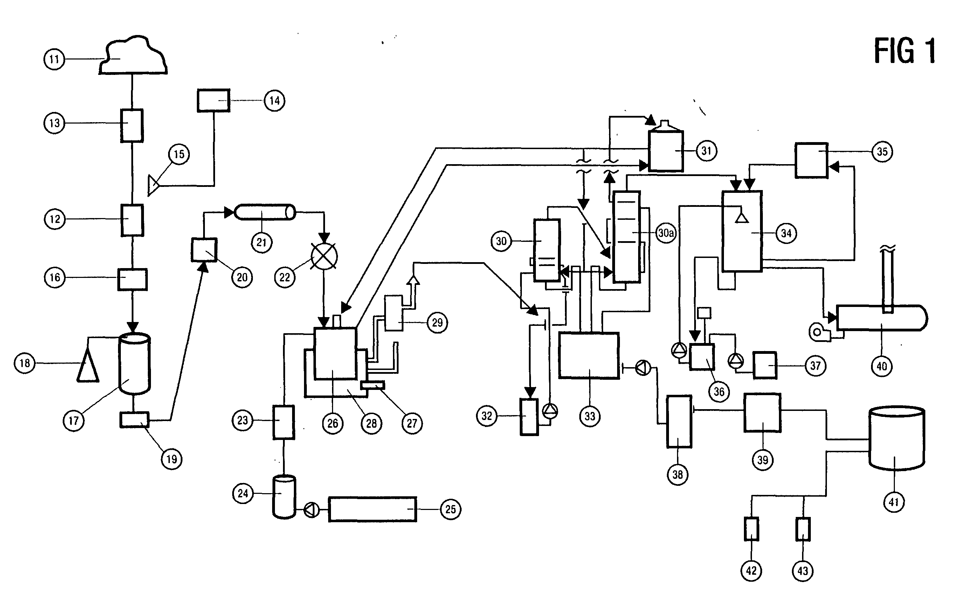

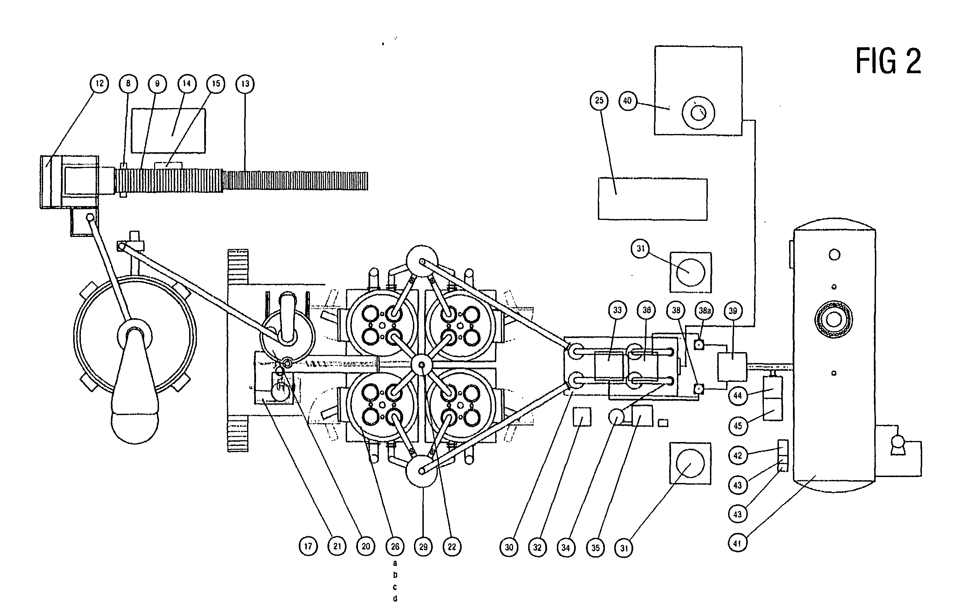

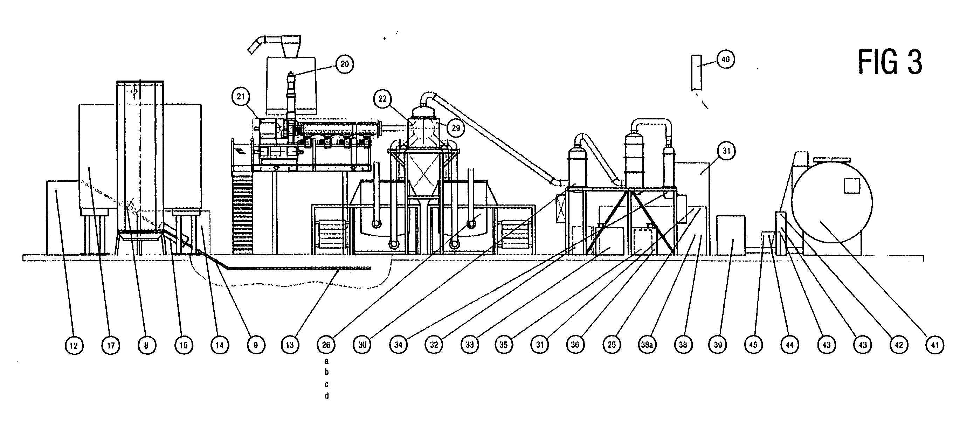

Referring to the figures wherein like reference numerals designate like or corresponding parts throughout the several views, and referring particularly to Figs. 1, 2 and 3, an overview process 6 and plant set up for converting waste plastic to diesel fuel is shown.

### Early process operation

Waste plastics in their original form of plastic sheets, drums, rolls, blocks and flat pieces are placed in a stockpile 11 and moved via an underfloor variable speed pan conveyor 13, through to a granulator 12 to reduce the size of the large items of waste plastic. An over-band magnet 15 is situated above the conveyor 13 to remove any metals prior to entry into the granulator 12. From the granulator 12, the reduced plastics are blown through to a fluidised holding silo 17 via a blower 16. A dust collector 18 associated with the holding silo 17 collects excess dust created by the action of the blower 16. All operations just described are preliminary preparations and may or may not be completed outside the normal operating times of the general thermolysis system discussed below.

### Thermolysis process

To begin the thermolysis process, granulated waste plastics are drawn from the holding silo 17 via a second blower 19 and force feeder 20, into an extruder and hot-melt feed system 21, which melts the waste plastics to a suitable temperature for adequate liquefied flow into a heated melt distribution manifold 22 via heated pipes which maintain adequate flow rates. The distribution manifold 22 is a valve operated system allowing distribution of liquid waste through four separate outlet pipes which each lead to a separate pyrolysis chamber 26a, 26b, 26c or 26d. Although the description is made with reference to four chambers, it is to be understood that the present invention is applicable to any number of chambers, designated at feature 26 herein. The chamber receiving liquid waste is preferably filled to capacity with liquid waste and then sealed and atmospheric ambient gases are substantially purged through the introduction of a preferably nitrogen gas blanket. Nitrogen is sourced from the nitrogen generator 25, through a nitrogen storage vessel 24, according to a nitrogen monitoring device 23. The gas used to purge the atmospheric gas may otherwise be selected from the group consisting of helium, hydrogen, methane, natural gas, or combinations thereof.

Each pyrolysis chamber is surrounded has provided a heater, such as a furnace 28 with a natural gas burner 27. Furnace heat is applied to bring the internal temperature of the main pyrolysis chamber up to a temperature between 375°C and 420°C. Standard internal rotating agitators ensure even heat transfer and a homogenous plastic mixture. Non feedstock materials or contaminants then fall to the bottom of the chamber 26 to create a carbonaceous char material which must be regularly removed before it builds-up on the pyrolysis chamber walls, wherein it acts as a thermal insulator and lowers the heat transfer to the plastic waste material. Char is therefore removed by suitable means, such as being continually scrapped off by rotating blades so that liberated char accumulates as a friable fine black powder at the bottom of the pyrolysis chamber, wherein it is automatically removed with an auger positioned at the base of the chamber.

To affect faster input and output of waste material, active cooling by cooling pump 31 is used on each of the main chambers 26 to reduce the cooling time f rom the standard 12 hours to a maximum of 7 hours, allowing faster turnaround between one process cycle and the next. Cooling may be implemented by fan, coil or similar mechanisms known in the art.

With a system of at least four pyrolysis chambers available for operation, one or two chambers may be set to operate and deliver pyrolytic gases to the reaction tower 29. While one or two chambers deliver these gases as required, the remaining chambers may be prepared for a following batch of gaseous input, thus allowing a semi-continuous operation and fuel output of the process. The valved heat distribution manifold 22 may be used to direct liquefied waste into any of the chambers as necessary to allow for system operation in a semi-continuous manner.

Upon heating of the selected main chamber to a temperature between 375°C and 420°C, internally sealed liquid waste plastic is gasified by pyrolysis, wherein gases are then drawn through into a catalytic converter reaction tower 29 where the gas components are thermolytically cracked. The catalytic reaction tower 29 contains a system of plates made from a special catalytic metal alloy. The metal plates are positioned so that the hot pyrolytic gases must take a torturous path to maximize contact area and time with the metal plates. The catalyst chamber 29 is heated to 270 Deg.C using the exhaust gases from the furnace of the selected pyrolysis chamber 26. The metal catalyst cracks carbon parafinic chains longer than C25 and reforms chains shorter than C6. There is conversion of alpha-olefin chains (1-alkenes) to saturated alkanes. The catalyst ensures that the final fuel has a carbon chain distribution in the range C8-C25 and peaking at C16 (cetane). The metal catalyzers are made of metals including Ni and Cu, or ceramics or zeolites in shape of punched plate and wire mesh type. The other catalysts include MCM-41 and the silicates of iron Fe3+, cobalt Co2+, nickel Ni2+, manganese Mn\2+, chromium Cr3+, copper Cu2+ and/or their mixtures. The catalyst is preferably not consumed or poisoned. The catalytic tower 29 uses technology known in the petrochemical industry and all detail concerning the processes of the reaction tower are publicly available in JP 3344952.

Thermolytically cracked gases are then drawn from the reaction tower 29 into one or more condensers 30 and/or 30a, where gases are distilled into separate fractions. Condenser 30 cools and distils the gases, drawing off liquids below 75°C. Condenser 30a cools and distils light non-condensable gases also below a temperature of 75° C. There are three cooling coils in the second condenser 30a and these are cooled with tower water or chiller water at 25 Deg.C. Water flows through preferably three coils run co-current with the direction of pyrolysis gas flow. At each coil position there is.a catchment tray and a bubble cap so the hot pyrolysis vapours must percolate through a layer of condensed fuel. This allows efficient condensation of the pyrolysis condensates.

These light gases are piped through to a gas scrubber 34 which supplies mildly basic water to neutralize and render the gases suitable for incineration through the off-gas burner 40. Alternatively the gas my be recycled to a burner as necessary. Alkaline water is supplied to the gas scrubber 34 by a caustic soda tank 35. De-odorising tank 37 and water tank 36 also supply necessary components to the gas scrubber 34.

From the condensers, the bulk of fractionated fuel that is not the light component is piped into an oil recovery tank 33, then to a centrifuge 38 and preferably a series of two or more centrifuges 38 and 38a for removal of unwanted solid waste, with one centrifuge per condenser train. These centrifuges remove carbon particles, water, ammonium hydroxide and light gases such as propane and butane from the fuel.

### Carbon chain length distribution

The resultant liquid fuel is not a 'pure' compound but a mixture of straight-chain and branched alkanes, cyclic saturated hydrocarbons and aromatics. The finished cleaned fuels are piped to a storage tank 41, for later distribution by either 500 Lpm bulk fill bowser 42 or 80 Lpm vehicle bowser 43.

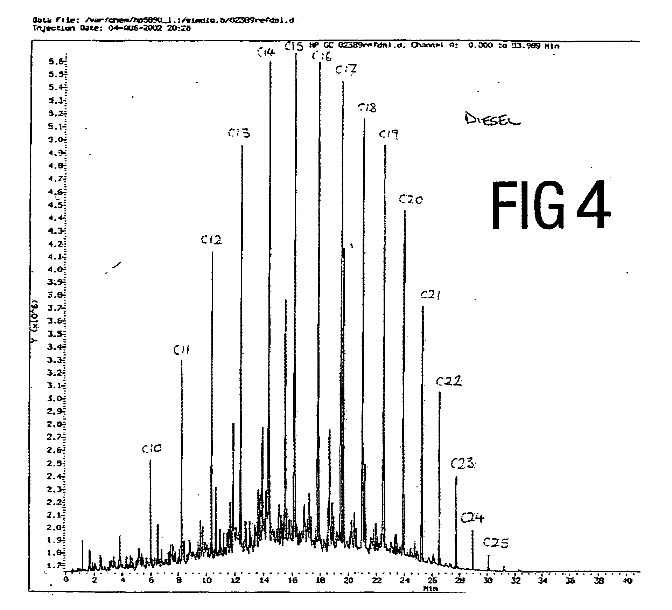

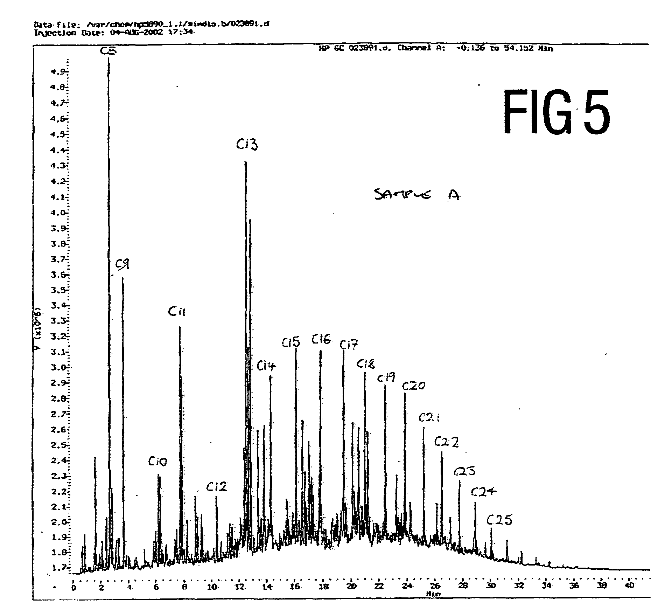

In particular reference to Figs 4 and 5, thermolysis diesel and regular (conventional) diesel fuel has been analyzed by gas chromatography (GC). The resultant chromatograms give a 'fingerprint' of the diesel with respect to the proportion of hydrocarbon chains of various carbon chain length. To perform as diesel fuel, the inventors have found that the fuel must be substantially rich in chains with a carbon chain length peaking around C16 (i.e. cetane). With reference to Figs 4 and 5, the carbon chain length distribution curve for regular diesel and thermalysis produced diesel in accordance with the present invention respectively are shown. It is important to note the higher proportion of light fraction (especially C8, C9, C11 and C13) is in the thermolysis produced fuel.

### Flash point modification

To meet the relevant standards for transportation diesel fuel (e.g. AS 3570-1998) it is necessary to increase the flash point of the thermolysis diesel to above 45°C - 53°C, preferably up to at least 61.5°C or a relevant minimum specification of standard. This can be achieved by removing a proportion of the light proportion in the fuel (approx. 5-7% by weight). It is accordingly necessary to strip the lights fraction from the thermolysis diesel. This is achievable by removing the light fraction with boiling points less than 160 Deg.C, which accounts for about 5-7% of the thermolysis fuel (see table below).

**Table 1.**

| discloses the full distillation range data [in accordance with ASTM D86] for Thermolysis diesel (and regular diesel fuel in parenthesis): | | |
|---|---|---|
| Initial boiling point | 141.5 deg.C | (190 deg.C) |
| 5% recovery | 154.5 deg.C | (210 deg.C) |
| 10% recovery | 172.5 deg.C | (240 deg.C) |
| 20% recovery | 209.5 deg.C | (250 deg.C) |
| 30% recovery | 245.5 deg.C | (265 deg.C) |
| 40% recovery | 270.5 deg.C | (270 deg.C) |
| 50% recovery | 282.5 deg.C | (285 deg.C) |
| 60% recovery | 290.5 deg.C | (295 deg.C) |
| 70% recovery | 297.5 deg.C | (310 deg.C) |
| 80% recovery | 307.5 deg.C | (330 deg.C) |
| 90% recovery | 321.5 deg.C | (345 deg.C) |
| 95% recovery | 332.5 deg.C | (360 deg.C) |
| Final boiling point | 348.5 deg.C | (380 deg.C) |
| | | |
| Recovery | 98% (98.5%) | |
| Loss | 1% (0.5%) | |
| Barometric reading | 102.5 kPa | |

In order to shift the boiling point range to a higher temperature and concomitantly increase the flash point of the fuel, preferably at least four inline strategies can be employed during the thermolysis process of the invention:
(i) Operate the condenser coils (not shown) at a higher operating temperature thus preventing condensation of the lighter fractions and allowing these them to carry on in the gas stream to the acid scrubber 34.
(ii) Modify the second condenser tower 30a. At present this condenser unit has three cooling coils which are running on approximately the same temperature cooling water (around 25 deg.C). If the lower coil were run independently of the upper two and used chilled water of around 15 deg.C, it would condense out disproportionately more of the light fraction than the upper two coils. The light fraction enriched stream would then need to be piped to a separate recovery vessel.
(iii) Heating the fuel in the primary oil recovery tank 33 by running heating fluid through the heat exchanger coils. In this way the light fraction can be vented off while the process is running. The heating coils use hot water to prevent waxing in the bottom of the tanks but hot thermal fluid (heat transfer oil) may be used to keep the tanks around 80-100 deg.C. Under these conditions the light vapours gently flash off.
(iv) Upgrading the centrifuge 38. The present centrifuge 38 removes carbon particles, water, ammonium hydroxide and light gases such as propane and butane from the fuel. By increasing the speed and efficiency of the centrifuge 38, a greater proportion of short chain hydrocarbons up to C8 can be removed.

Each of the above techniques for removing the unwanted light fraction can be used individually or preferably in any combination thereof.

### Thermolysis process mass balance

As an example of the use of the present invention, the following details are provided are provided by way of example only and the invention is not to be construed as being limited by the following:
MASS BALANCE FOR 10 tonne/day THERMOLYSIS PLANT - PER 24 hrs
1. MATERIAL INPUT
10,000 kg of post-industrial polyethylene film, polypropylene film, nylon film with a compositional ratio of PE43%, NY7% and PP50%.
2. OTHER INPUTS*
- Natural gas for furnace burner = 1,791 kg (see calculation below)
- Nitrogen gas = 1.7 m3 x 4 = 6.8 m3

3. OUTPUTS
- Oil (1.05 recovery ratio) = 10,500 litres x 0.80 (density) = 8,400 kg
- Off-gas‡ = (12% by wt.) = 1,200 kg (combusted in off-gas incinerator‡‡)
- Solid residue (3 wt.%) = 300 kg (mainly carbon and ash
- Waste fraction from centrifuge = 10 kg (carbon, tar and water)
- Ammoniated water from centrifuge = 88 L x 0.9 (density) = 79.5 kg
- Scrubber waste stream = < 3.3 kg (neutralized by NaOH)

Notes:
* the above mass balance is for clean PE/PP/nylon film. If the feedstock is post-consumer PE containing residuals the solid residue fraction would be expected to be at least 5%. Also the waste fraction from centrifuge would also be expected to increase since this is where water from the chamber accumulates.
‡ Off-gas composition is mainly saturated short-chain hydrocarbons including methane, ethylene, ethane, propylene, propane, n-butane and isobutane.
‡‡ Flue gas composition from off-gas incinerator is:

| | |
|---|---|
| NOx | 198 ppm |
| SOx | < 5 ppm |
| Temp. | 438 deg.C |
| H2O content | 13% |
| dust density | 0.06 g/m3 |

### Units and Calculations

1 gallon of diesel fuel = 139,000 Btu
1 cubic foot of natural gas = 1,026 Btu
1 cubic meter of natural gas = 1.85 kg
1 kilogram of natural gas = 13.88 kWh

1 gallon of propane = 91,000 Btu
1 kilogram of propane = 12.9 kWh

### Units:

Cubic feet X 0.02831685 = cubic meters
1 cubic meter = 1,000 litres = 35.31 cubic feet
1 gallon = 3.785 litres

1 Btu = 252.0 calories = 1055 joules
1 kilojoule = 0.9479 Btu
1 kilowatt-hour = 3.600 x 106 joules = 3,412 Btu

10t of plastic in will give 10,500 litres of diesel fuel

As the present invention may be embodied in several forms without departing from the spirit of the essential characteristics of the invention, it should be understood that the above described embodiments are not to limit the present invention unless otherwise specified, but rather should be construed br oadly within the spirit and scope of the invention as defined in the appended claims. Various modifications and equivalent arrangements are intended to be included within the spirit and scope of the invention and appended claims. Therefore, the specific embodiments are to be understood to be illustrative of the many ways in which the principles of the present invention may be practiced. In the following claims, means-plus-function clauses are intended to cover structures as performing the defined function and not only structural equivalents, but also equivalent structures. For example, although a nail and a screw may not be structural equivalents in that a nail employs a cylindrical surface to secure wooden parts together, whereas a screw employs a helical surface to secure wooden parts together, in the environment of fastening wooden parts, a nail and a screw are equivalent structures.

"Comprises/comprising" when used in this specification is taken to specify the presence of stated features, integers, steps or components but does not preclude the presence or addition of one or more other features, integers, steps, components or groups thereof."

## Claims

1. In a process for the thermocatalytic conversion of waste materials into reusable fuels, comprising the steps of:
a) providing waste material,
b) directing melted waste material from one or more manifolds into one or more pyrolysis chambers;
c) heating waste material to effect gasification of material in a substantially oxygen purged and pressure controlled environment;
d) transferring resulting gases to a catalytic converter means wherein the molecular structure of the gaseous material is altered in structure and form;
e) transferring gases to one or more condenser means to distil and cool gases in to their respective fractions; said fractions forming a useable fuel,
the improvement comprising delivering the waste material to a means for liquefying or melting the waste material prior to delivery to the chambers.

2. A process for the thermocatalytic conversion of waste materials into reusable fuels, wherein said process is at least semi-continuous in operation.

3. A process for the thermocatalytic conversion of waste materials into reusable fuels, wherein melted waste material is directed into two or more pyrolysis chambers.

4. A process as claimed in claim 3, wherein the chambers are capable of independent operation.

5. A process for the thermocatalytic conversion of waste materials into reusable fuels, wherein a plurality of pyrolysis chambers operate independently to allow cyclic transferral of gaseous material from one or more pyrolysis chambers to a catalytic converter means.

6. A process for the thermocatalytic conversion of waste materials into reusable fuels, wherein a plurality of pyrolysis chambers are used alternately at least one at a time so that one pyrolysis chamber is able to cool while another pyrolysis chamber is able to transfer gaseous material to a catalytic converter means.

7. A process for the thermocatalytic conversion of waste materials into reusable fuels, wherein one or more pyrolysis chambers are actively cooled after completing transferral of gaseous waste material to a catalytic converter means.

8. A process for the thermocatalytic conversion of waste materials into reusable fuels, wherein char is mechanically removed from one or more pyrolysis chambers by use of one or more augers.

9. A process as claimed in any one of claims 1 to 8, wherein said process uses at least four pyrolysis chambers.

10. A process as claimed in any one of claims 1 to 9, wherein melted waste material is received by the chamber(s) by selective operation of a manifold system having a corresponding number of inlet pathways.

11. A process as claimed in claim 10, wherein said manifold system is pre-heated.

12. A process as claimed in any one of claims 1 to 11, wherein said waste material is plastic.

13. A process as claimed in any one of the preceding claims, wherein said melting means is a hot-melt in-feed system.

14. A process as claimed in claims 1 or 13, wherein the melting means is located prior to the pyrolysis chamber.

15. A process as claimed in claim 1, wherein said catalytic converter consists of a series of high-surface area internal metal plate catalysts.

16. A process as claimed in claim 1 or 15, wherein the plate catalyst is selected from the group including ceramics, zeolites, the silicates of iron Fe3+, cobalt Co2+, nickel Ni2+, manganese Mn\2+, chromium Cr3+, copper Cu2+ and/or their mixtures or the catalyst MCM-41.

17. A process substantially as herein disclosed.

18. A substantially carbon based fuel product produced by the process of any one of the preceding claims, the fuel including carbon chains in the range of length C6 to C25.

19. A substantially carbon based fuel product produced by the process of any one of the preceding claims, the fuel including carbon chains in a range peaking at length C16.

20. A substantially carbon based fuel product produced by the process of any one of the preceding claims that is substantially equivalent to the diesel fuel standard in Australia, specified as AS 3570-1998.
